# EUROPEAN PATENT APPLICATION

(11) **EP 1 295 908 A1**
(43) Date of publication of application: **26.03.2003**
(21) Application number: 01203652.1
(22) Date of filing: 25.09.2001
(51) Int. Cl.: C08L 23/00, C08L 31/00, C08J 5/18

(54) **Polymer film with controllable tear behaviour**

(71) Applicant: Transpac N.V., 1160 Bruxelles (BE)
(72) Inventor: Malfait, Tony, 8880 Ledegem (BE); Bogels, Erik, 3620 Lanaken (BE); Rosseau, Patrick, 1850 Grimbergen (BE); Veys, Luc, 9000 Gent (BE)
(74) Representative: Meyers, Ernest

(57) **Abstract**

The present invention is related to a controllable tear film material comprising a material which is a mixture of at least two polymers that form at least two phases in the melt and in the film extruded thereof, said mixture comprising at least 70 to 90 % of the total weight of a first polymer selected from the group consisting of LDPE, VLDPE, LLDPE, MDPE, HDPE, ionomers and EVA, EBA and EMA, and 10 to 30% of a second incompatible cyclic organic copolymer selected from a group comprising norbornene and having glass transition temperatures between 60°C and 160°C where the tear propagation resistance, in the machine and the perpendicular transverse direction, in the said film material is reduced by at least 80%, and the elongation at break by at least 60% compared to the pure monophasic polymer.

## Description

### Field of the invention

The present invention is related to a polymeric film with controllable tear resistance and tear direction more particularly for easy tear masking tape or for press-through film, stick packs and one portion packaging applications.

### State of the art

In the last years, several development projects have tried to bring together the tear properties of paper with the low permeability and low water absorption characteristics of plastic films. Low paint absorption of masking tape for painters allowed them to get sharper borders and to remove the tape even before the paint dries which makes the operation less time consuming.

It is generally known to those skilled in the art that the tear resistance of a plastic film is strongly dependent of the tear direction (machine or transverse direction), and of the production technology.

On a cast extrusion line technology, the films are anisotropic and have generally a low tear resistance in machine direction due to alignment of the polymer molecules in the extrusion direction.

In the opposite, the tear resistance of the film in the transverse extrusion direction is generally two or tree times higher in this technology.

In the other hand, in the blown film technology, the differences between the tear resistance in machine and transverse machine direction is less prominent and essentially conditioned by the blow up ratio of the film.

The present evolution in these technologies towards films with higher impact, tear and puncture resistance, and this leads to new developments in polymer grades based on metallocene catalysis or multi-reactor technology leading to a bimodal molecular weight distribution.

For plastic tape, press-trough applications, stick and one portion packs however, the tearing behaviour is the key aspect of a good performance. A plastic tape should be tearable without any auxiliary instrument such as scissors which are necessary for many plastic tapes. Furthermore, the tear direction controllability is of major importance especially for stick and one portion pack applications where tearing in other directions than the extrusion direction or the perpendicular transverse extrusion direction should be avoided.

It is known in the art that film extrusion of two or more incompatible materials results in the modification of the mechanical properties and generally in a drop of the tear resistance. Several approaches are possible, one of those being the addition of high quantities of organic fillers as for example talcum, clays, carbonates or metal oxides.

The use of such abrasive fillers leads nevertheless to undesirable wear effects on screws and extruder barrels as well as on dies and down stream equipments.

Another option is based on the blending of partially miscible or immiscible polymers which are extrusion hardware friendly and usable on long extrusion runs without major wear effects on screw and barrel. The present invention is based on this principle.

In the document EP 0962485-A1 Schnäbele reaches the tear controllability by adding an organic or inorganic filler with particle sizes between 5 and 100 µm consisting of halogenated polymers as PTFE, polyethersulfone for the organic fillers and silicates, metaloxides, calcium carbonate for the inorganic fillers.

As far as these polymers are extruded below their melting point or as solid particle they can be considered as inert fillers and causes therefore undesirable wear effects as mentioned before. It is obvious that the processability of particles of 100µ represents a major problem for film applications of thicknesses below 100µ and generally the processability of particles thicker than the film itself.

In the document JP 11-105217, Mitsuharu reaches a very low puncture resistance on a laminated multilayer complex of polypropylene, PVC and a cyclic olefin based resin. This laminate is difficult to recycle and not reprocessable.

Hoh discloses in the document US 5,484,631 a press through foil for press through packaging consisting of an incompatible two phase polymer system with reduced tensile strength and puncture resistance. In this document, blends of PVC and LLDPE as well as blends of polypropylene, SAN, calcium carbonate and LLDPE are extruded. In this case, the styrene polymer builds a second phase which reduces the puncture resistance. The disadvantage of such formulations is the requirement of a dry blend planetary gear extruder to deal with powder feeding.

None of the prior art documents discloses a film with controllable tear strength and simultaneously controllable tear direction even in a complex multilayer structure. This is one of the reasons why the film presented in the present invention can also be used for the portion packs which are often laminates (barrier properties), comprising for instance PP/alu/CT.

Nowadays this easy tearing behaviour of laminated structures for instance stick and portion packs is obtained via laser perforation or via another converting technology in which the laminated structure is locally weakened through abrasion with sandpaper on a slitting line. All these techniques necessites heavy and expensive converting equipments.

### Aims of the invention

The present invention aims to provide a polymer film with controllable and directional tear properties for masking tape, press-through film, stick and one portion packs, using partially compatible or incompatible polymer blends in a monolayer film or in a functionalized coextruded film, with a core layer exhibiting the improved tear properties.

### Summary of the invention

The present invention discloses a controllable tear film material comprising a material which is a mixture of at least two polymers that form at least two phases in the melt and in the film extruded thereof, said mixture comprising at least 70 to 90 % of the total weight of a first polymer selected from the group consisting of LDPE, VLDPE, LLDPE, MDPE, HDPE, ionomers and EVA, EBA and EMA , and 10 to 30% of a second incompatible cyclic organic copolymer selected from a group comprising norbornene and having glass transition temperatures between 60°C and 160°C where the tear propagation resistance, in the machine and transverse direction, in the said film material is reduced by at least 80%, and the elongation at break by at least 60% compared to the pure monophasic polymer.

A key aspect of the present invention is that the tear occurs preferentially in machine direction or in the perpendicular direction of the machine. The machine direction is considered as being the extrusion direction. The transverse direction (TD), is the perpendicular direction to the two dimensional film.

Another key aspect of the present invention is that the film keeps its directional tearing properties even within a complex multilayer structure with barrier structures.

A further surprising and unexpected primary advantage of this invention is that the difference of the tear propagation resistance in machine direction and in the transverse direction are reduced and smaller than 50%.

In a preferred embodiment of this invention, the film can be submitted to a "corona" treatment or coextruded with a functional layer to improve adhesability or sealability to be used for tape and press through applications as well as for sticks and one portion packs.

In a particular embodiment of the present invention, the film has a thickness between 10 and 200 µm and preferably between 20 and 100 µm.

### Short description of the drawings

Fig.1 shows a comparison of the tear propagation properties of a 50µm film on various polymers as EVA (9.5% and 19% Vinyl acetate content), LDPE and an Ionomer, containing 20% of a cyclo olefinic copolymer characterised by a glass transition temperature of 140°C.

Fig.2 represents the comparison of the tear propagation properties of a 50µm blown LDPE film and a 50µm blown controllable tear cast film (CT) with LDPE as the major component and 20% of a cyclo olefinic copolymer characterised by a glass transition temperature of 140°C.

Fig.3 represents the comparison of the elongation at break of a 50µm blown LDPE film and a 50µm blown controllable tear (CT) film with LDPE as a major component and 20% of a cyclo olefinic copolymer characterised by a glass transition temperature of 140°C.

Fig.4 shows the relative reduction of the tear propagation properties of a 50 µm blown LDPE blended with COC (Tg=140°C).

Fig.5 shows the relative reduction of the tear propagation properties of a 50 µm blown LDPE blended with COC (Tg=80°C).

Fig.6 shows the relative reduction of the tear propagation properties of various 50 µm blown films blended with COC (Tg=140°C).

### Detailed description of the invention

The idea of the invention is to associate usual commercial polymers as VLDPE, LDPE, LLDPE, MDPE, HDPE EVA, EMA, EBA... to cyclo olefinic copolymers with a variable co-monomer content, for example, 35 to 50% norbornene or other comonomers. These copolymers are commercialised by several companies like Mitsui or Ticona and are generally characterised by their glass transition temperature which varies generally between 60 and 160°C.

The glass transition temperature increases with the comonomer content, parallel to the stiffness and to the reduction of the elongational properties, at the same time the compatibility with polyolefins or their copolymers decreases. The blend, base polymer and COC has to be chosen adequately to compatibilise the solubilities and the process parameters. The difference in the physicochemical properties of the incompatible polymers influences the processing windows of the individual components. Adequate definition of blown film extrusion conditions combined with the right resin types is essential for the production of the film according to this invention.

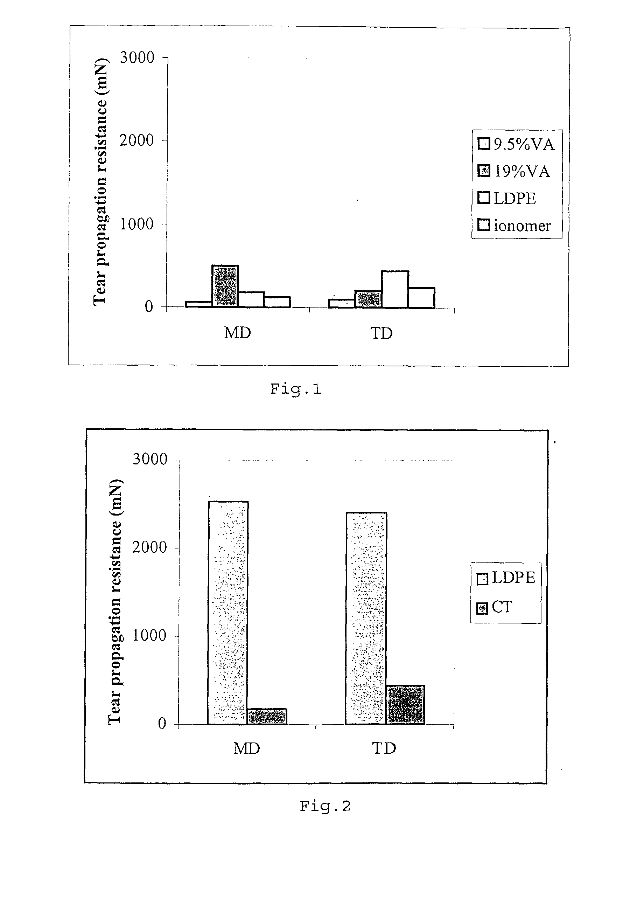

The decrease in film toughness can be quantified in terms of the elongation at break and the tear propagation resistance. The effect of the addition of an incompatible COC, characterised by a glass transition temperature of 140°C, to various polymers is shown in Fig.1.

The tear propagation resistance values have been measured according to ASTM D1922 (Elmendorf).

The elongation at break has been measured according to ASTM D882.

The addition of COC makes the film stiffer, the result of this influence is an increasing easiness to tear the film. Another effect of the COC is a dramatic reduction of the difference between the mechanical properties in the extrusion direction (MD) and in the transverse direction (TD).

The anisotropic effects of COC's with different glass transition temperatures is particularly surprising.

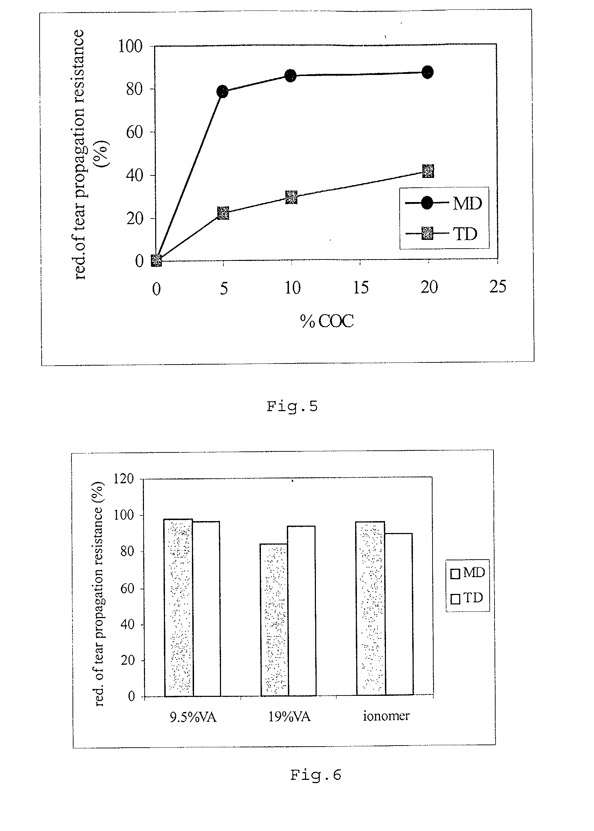

Fig.4 shows the effect of the addition of a COC with Tg = 140°C. No reduction of the tear propagation resistance is observed on the transverse direction up to a level of 10%, while the effect on the machine direction is progressive. With 20 % of this COC, the reduction of the tear propagation reaches roughly 80% in the tansverse direction and 90 % in the machine direction.

The problems that frequently arise with non-optimised processing conditions are gels, resin degradation, mixing problems, an unstable bubble and uneven thickness variations over the film width. As far as no fillers are used in the present invention the processing conditions are easier to optimise.

### Description of a preferred embodiment of the invention

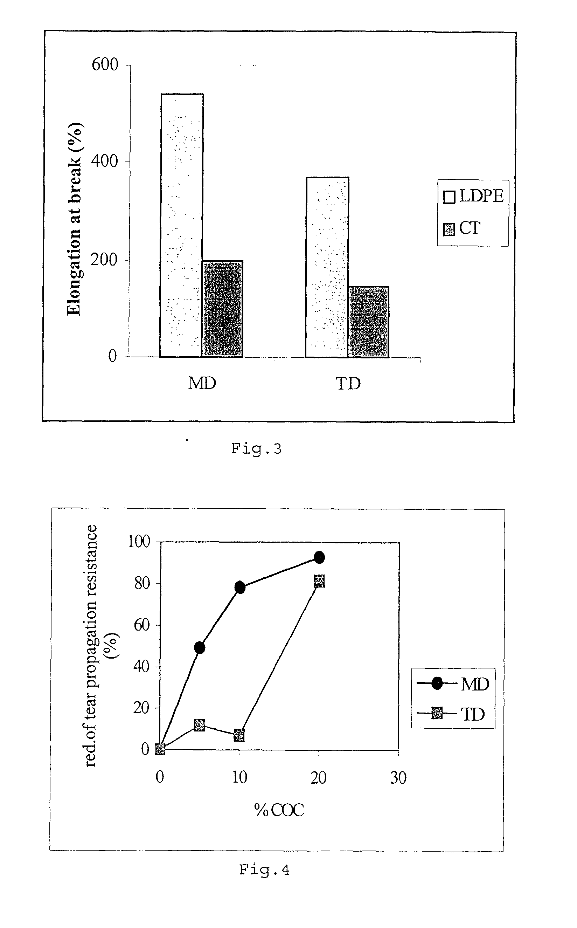

Some examples are given by the following extrusion film formulations which can be realised in various thicknesses. The registered trade names of the polymer supplier are used in the different examples. The results of the variation in the mechanical properties are given in Fig.2, Fig.3 and Fig.6.
1. LDPE tearable film
   79% Lupolen 3020H (Basell, ρ=0.927, MI=2) - as main polymer 20% Apel APL6509(Mitsui Tg=80) - as cyclic organic
   copolymer
   1% Schulman Polybatch CE 503E (Slip MB, ρ=0.937, MI=20).
2. VLDPE tearable film
   70% Exact 0201 (Dex Plastomers, ρ=0.902, MI=1) - as main polymer
   29% Apel APL6013 (Mitsui Tg=125) - as cyclic organic copolymer
   1% Schulman Polybatch CE 503E (Slip MB, ρ=0.937, MI=20).
3. EVA tearable film
   70% Escorene FL00119 (Exxon Mobil, 19%VA, MI=0.65) - as main polymer
   24% Topas 8007 (Ticona Tg=80°C) - as cyclic organic copolymer
   6% Ampacet 11999 (White MB, ρ=2.22, MI=12) - as colour.
4. HDPE tearable film
   82% Stamylan 9630 (DSM, ρ=0.959, MI=2) -as main polymer
   17% Apel APL6015 (Mitsui, Tg=145°C) -as cyclic organic copolymer
   1% Schulman C2045 Cest (antiblock + slip MB, ρ=1.05, MI=8)
5. Ionomer tearable film
   80% Surlyn 1652 (Dupont, ρ=0.940, MI=5) - as main polymer
   19% Topas 6013 (Ticona, Tg=140°C) - as cyclic organic copolymer
   1% Schulman C2045 Cest (antiblock + slip MB, ρ=1.05, MI=8)

While the invention has been illustrated and described in what are considered to be the most practical and preferred embodiments, it will be recognised that many variations are possible and come within the spirit and the scope thereof, the appended claims therefore being entitled to a full range of equivalents.

## Claims

1. A controllable tear film material comprising a material which is a mixture of at least two polymers that form at least two phases in the melt and in the film extruded thereof, said mixture comprising at least 70 to 90 % of the total weight of a first polymer selected from the group consisting of LDPE, VLDPE, LLDPE, MDPE, HDPE, ionomers and EVA, EBA and EMA, and 10 to 30% of a second incompatible cyclic organic copolymer selected from a group comprising norbornene and having glass transition temperatures between 60°C and 160°C where the tear propagation resistance, in the machine and the perpendicular transverse direction, in the said film material is reduced by at least 80%, and the elongation at break by at least 60% compared to the pure monophasic polymer.

2. A controllable tear film material as in claim 1 wherein the tear occurs preferably in machinedirection or in the perpendicular direction of the machine.

3. A controllable tear film material as in claim 1 and 2 wherein the film keeps its directional tearing properties even within a complex multilayer structure.

4. A controllable tear film material as in claim 1, wherein the difference of the tear propagation resistance in machine direction and in transverse direction is reduced and smaller than 50%.

5. A controllable tear film material according to any one of the preceding claims, wherein the film has been submitted to a "corona" treatment or coextruded or coated with a functional layer to improve adhesability or sealability.

6. A controllable tear film material according to any one of the preceding claims, wherein the film is used for tape and press trough applications as well as for sticks and one portion packs.

7. A controllable tear film material according to any one of the preceding claims, wherein the film has a thickness between 10 and 200 µm.

8. A controllable tear film material according to any one of the preceding claims, wherein the film has a thickness between 20 and 100 µm.
